(19) Europäisches Patentamt
European Patent Office
Office européen des brevets

(11) **EP 4 299 316 A1**

(12) **EUROPEAN PATENT APPLICATION**

(43) Date of publication:
**03.01.2024 Bulletin 2024/01**

(21) Application number: **22182590.4**

(22) Date of filing: **01.07.2022**

(51) International Patent Classification (IPC):
**B33Y 80/00** (2015.01)  **C04B 41/51** (2006.01)
**C22C 29/04** (2006.01)  **C22C 29/10** (2006.01)
**C22C 33/02** (2006.01)  **B33Y 70/10** (2020.01)
**C22C 29/06** (2006.01)

(52) Cooperative Patent Classification (CPC):
(C-Sets available)
**B33Y 80/00; B02C 17/20; B22F 5/10; B33Y 70/10;
C22C 29/005; C22C 29/04; C22C 29/10;
C22C 33/0292;** B22F 2005/002; B22F 2998/10;
C22C 29/06                                    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: MAGOTTEAUX INTERNATIONAL S.A.
**4051 Vaux-sous-Chèvremont (BE)**

(72) Inventors:
• **DESILES, Stéphane
  4920 Aywaille (BE)**
• **BABINEAU, Marc
  4052 Beaufays (BE)**
• **MERTENS, Marc
  4900 SPA (BE)**

(74) Representative: **Aronova
  Aronova S.A.
  BP 327
  12, avenue du Rock'n'Roll
  4004 Esch-sur-Alzette (LU)**

(54) **METAL MATRIX COMPOSITE GRINDING BALL WITH STRUCTURAL REINFORCEMENT**

(57) The present invention is related to a composite grinding ball comprising:
- a ferroalloy metal matrix,
- a reinforcement shell of an openwork ceramic structure of aggregated ceramic metal composite particles, said aggregated particles comprising micrometric ceramic particles cemented in a binder metal matrix;
wherein said aggregated ceramic metal composite particles are embedded in said ferro alloy metal matrix.

Fig.3

EP 4 299 316 A1

(52) Cooperative Patent Classification (CPC): (Cont.)

C-Sets
B22F 2998/10, C22C 1/05, B22F 10/14,
B22F 10/64, C22C 1/1036

## Description

### Field of the invention

The present invention discloses a metal matrix composite grinding ball obtained by conventional casting technology and reinforced with a shell of a precast body of a ceramic openwork structure. The shell is a precast body placed in the cavity of the cast mould before pouring of the cast metal matrix, the obtained grinding ball having an improved resistance to the combined abrasion and impact stresses.

The openwork reinforcement structure of the grinding ball of the present disclosure is obtained by additive manufacturing in a 3D printer and consists of a microporous aggregated of ceramic metal composite and metal particles. The ceramic metal composite particles comprise cemented micrometric particles of borides, nitrides, carbonitrides, or carbides such as TiC, TiCN, NbC, TaC, ZrC, HfC, $Mo_2C$, WC, preferably titanium carbide or titanium carbonitride cemented in a metallic binder matrix. The micropores of the aggregate being infiltrated by the cast metal during the pouring operation and the aggregated ceramic metal composite particles being finally completely embedded in the cast metal matrix.

### State of the art

The present invention relates to grinding balls used in tumbling mills in the grinding and crushing industry such as for example cement factories or ore grinding in mines. Grinding balls are subject to high mechanical stresses in the bulk and to high surface wear by abrasion or corrosion. It is therefore desirable that grinding balls should exhibit high abrasion or corrosion resistance and some ductility to be able to withstand ball on ball impacts or ball on liner impacts.

Given that these two properties are difficult to match with the same material composition, composite grinding balls have been proposed in the past with a matrix made of relatively ductile alloy in which ceramic particles of good wear resistance are embedded.

Document CN 106914620A (2017) discloses a preparation method of a composite grinding ball, using selective laser cladding combined with 3-dimensional digital modelling technique, with a precast body openwork structure, placed in the mould cavity before casting.

Documents CN103357854 (2013) and CN113564511A (2021) disclose ceramic reinforced grinding balls, the reinforcing layer comprising inlaying nanometer-grade ceramic particles on the surface and the sub-surface of the grinding ball. The casting mould being coated with nanometric ceramic particles on the inner wall.

The grinding ball market is cost price sensitive and therefore an optimum of wear performance and price must be targeted giving the manufacturing process a crucial importance. The manufacturing of the precast ceramic spherical openwork structure by 3D additive manufacturing in an economic and safe way, its solidity during the cast operation and its ability to be infiltrated by the cast metal without damage is therefore of major importance.

Fine micrometric ceramic powders other than oxides such as for instance TiC, TiCN, NbC, TaC, WC of a size lower than 53$\mu$m can be difficult to handle because they are reactive (potentially flammable and/or explosible) and should require an inert atmosphere to be safely used in additive manufacturing. On the other hand, non-oxide ceramic particles of a larger size (>100$\mu$m) could potentially be used without controlled atmosphere, but such coarse particles are less performant due to the well-known inherent brittleness of ceramic particles. The pure ceramic coarse particles of the additively manufactured precast body, are too brittle to resist the wear conditions. From the manufacturing point of view, fine particles are usually hardly flowable while coarse particles have much higher flowability. Coarse particles present also less health issues than fine particles.

### Aims of the invention

The present invention aims to provide a grinding ball obtained by conventional casting technology reinforced with a shell of a precast ceramic openwork structure, placed in the cavity of the cast mould before pouring the grinding balls. The openwork structure comprising a suitable concentration of ceramic metal composite particles embedded in the cast metal matrix and being substantially free of unfilled micropores.

### Summary of the invention

The present invention discloses a composite grinding ball comprising:

- a ferroalloy metal matrix,
- a reinforcement shell of an openwork ceramic structure of aggregated ceramic metal composite particles, said aggregated ceramic metal composite particles comprising micrometric ceramic particles cemented in a binder metal matrix;

wherein said aggregated ceramic metal composite particles are embedded in said ferro alloy metal matrix.

Preferred embodiments of the present invention disclose at least one, or an appropriate combination of the following features:

- the micrometric ceramic particles are selected from the group consisting of metallic borides, metallic nitrides, metallic carbides and metallic carbonitrides;
- the micrometric ceramic particles are selected from the group consisting of titanium carbide, titanium carbonitride, niobium carbide, tantalum carbide, zirconium carbide, hafnium carbide, vanadium carbide, molybdenum carbide and tungsten carbide or mixes thereof;
- the micrometric ceramic particles are selected from the group consisting of titanium carbide or titanium carbo nitride or mixes thereof;
- the ceramic composite particles have an average particle size $D_{50}$ lower than 500 $\mu$m, preferably lower than 400 $\mu$m;
- the micrometric ceramic particles cemented in the binder metal matrix have an average particle size $D_{50}$ lower than 30 $\mu$m, preferably lower than 20 $\mu$m, most preferably lower than 10 $\mu$m;
- the binder metal matrix cementing the micrometric ceramic particles is selected from the group consisting of ferromanganese-based alloy, ferrochromium-based alloy and nickel-based alloy and wherein the binder metal matrix and the ferro alloy metal matrix have a different composition;
- the cast ferroalloy metal matrix comprises steel or chromium cast iron;
- the concentration of the ceramic particles within the openwork structure is between 30 to 55 vol %, preferably between 35 and 50 vol %;
- the openings of the reinforcement shell of the openwork ceramic structure represents between 10 and 70 %, preferably 25 and 70 % of the surface of the grinding ball.

The present invention further discloses a method for the manufacturing of the grinding ball of the present invention comprising the steps of:

- a) additive manufacturing of a shell of a ceramic openwork structure with a powder mix comprising ceramic metal composite particles;
- b) positioning of the shell of the ceramic openwork structure in a cavity of a mould;
- c) pouring the ferro alloy cast metal in the mould to obtain the reinforced grinding ball of claim 1.

Preferred embodiments of the method of the present invention disclose at least one, or an appropriate combination of the following features:

- an additional step of at least partially sintering the shell of the ceramic openwork structure;
- the step of at least partially sintering the shell of the ceramic openwork structure comprises a partial impregnation of the interstices between the ceramic metal composite particles of said structure by a metal selected from the group consisting of steel and chromium cast iron or combinations thereof before the positioning in the cavity of the mould and the final casting;
- the step of at least partially sintering is followed by a hot isostatic pressing step or post infiltration;
- step a) comprises the addition of 2 to 20 wt%, preferably 5 to 20 wt%, most preferably 10 to 18 wt% of carbide forming metallic particles selected from the group consisting of tungsten, vanadium, molybdenum, titanium, niobium, hafnium and zirconium or mixtures thereof;
- the ceramic composite particles of the powder mix of step a) comprises at least 95 %, preferably 98 %, of particles larger than 150 $\mu$m.
- step a) is performed by binder jetting technology followed by a binder curing at a temperature above 100°C;
- the step of pouring the cast metal to obtain the reinforced grinding ball is performed in a grinding ball cluster mould.

## Short description of the drawings

Fig. 1 and 2 represents various 3D models of shells of precast ceramic openwork structures manufacturable by additive manufacturing and destined to be placed in the cavity of the cast mould before pouring.

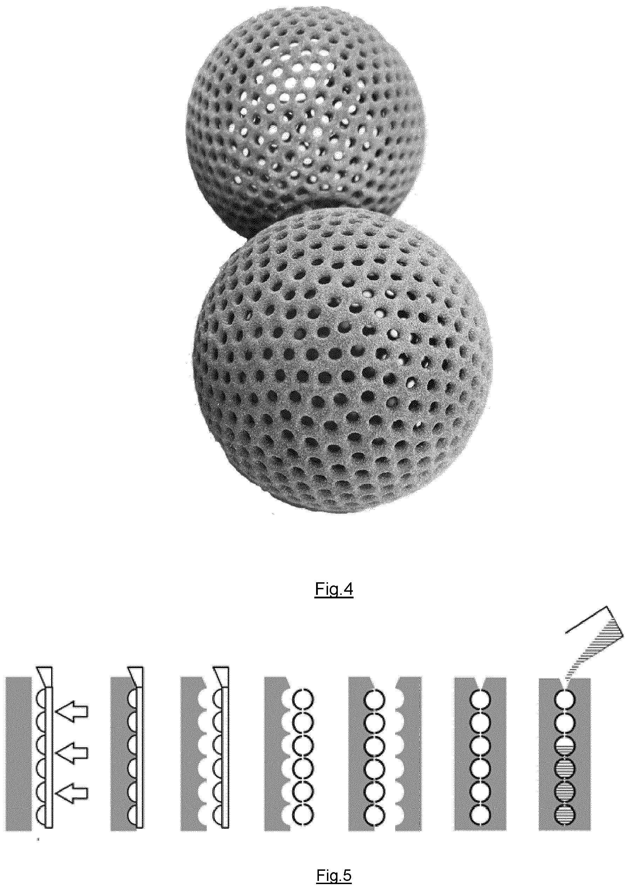

Fig. 3 and 4 represents examples of additive manufactured shells of precast ceramic openwork structures as single or double sphere comprising aggregated ceramic metal composite particles. The spheres have a diameter of 80 mm and holes of 2 mm diameter.

Fig. 5 represents the placement of the shells of the precast openwork structure in the cavities of the mould before pouring of the cast metal.

Fig. 6 represents schematically a typical configuration of a mould for grinding balls cast in a cluster mould.

Fig.7 to Fig.10 represents the 3D models of the precast ceramic openwork structures of examples 1 to 4 used to illustrate the reinforced grinding balls of the present disclosure.

In detail, (disregarding inflow hole):

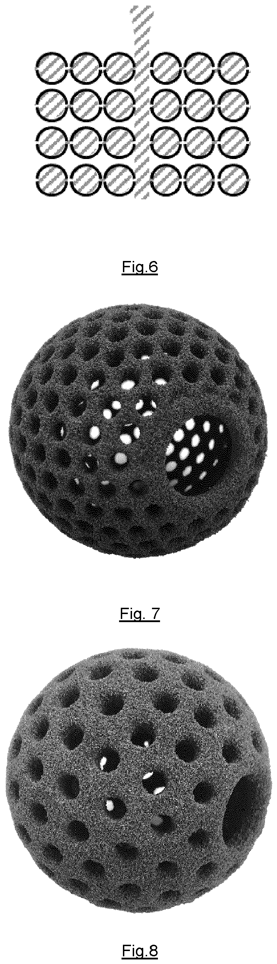

- Figure 7 represents an openwork structure for a grinding ball of 80 mm diameter with holes/openings of 6 mm diameter for example 1.
- Figure 8 represents an openwork structure for a grinding ball of 90 mm diameter with holes/openings of 8 mm diameter for example 2.

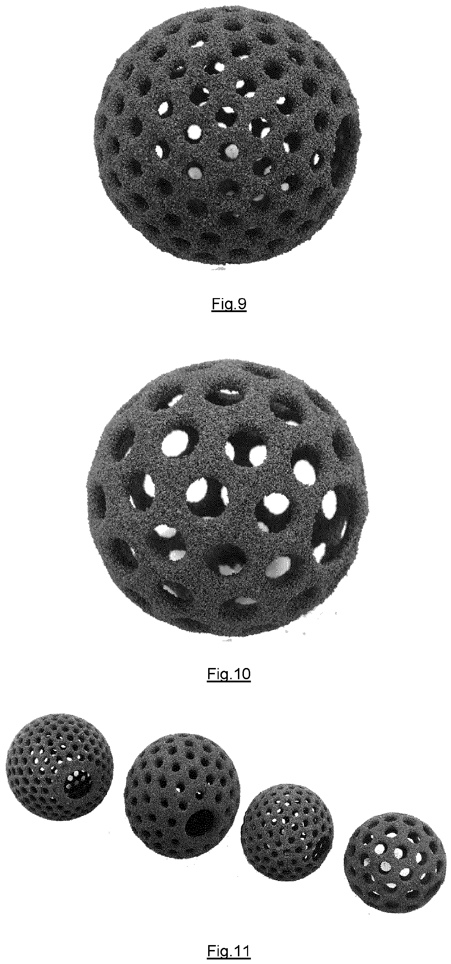

- Figure 9 represents an openwork structure for a grinding ball of 70 mm diameter with holes/openings of 6 mm diameter for example 3.
- Figure 10 represents an openwork structure for a grinding ball of 70 mm diameter with holes /openings of 10 mm diameter for example 4.

Fig.11 represents the openwork structures of examples 1 to 4 as a group in a real proportion format.

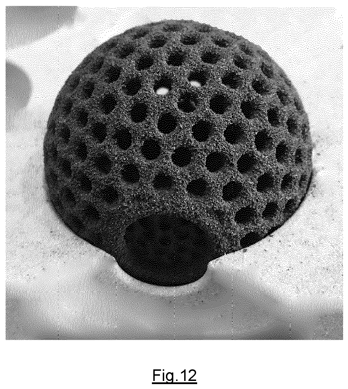

Fig.12 represents the precast openwork structure positioned in the cast mold. In the following description the expressions "holes" ore "openings" in the openwork structure are used interchangeably.

## Detailed description of the invention

Description of the additive manufacturing steps of a shell of an openwork structure

To manufacture the precast openwork structure of the present disclosure, it is necessary to create a digital 3D model structure and build it with powder of ceramic metal composite and metal particles in a 3D printing (additive manufacturing) device, the technology used in the present case is preferably binder jetting but is not limited thereto.

A general overview about 3D printing techniques and the various ASTM standards associated to characterisation and methods has been published on ScienceDirect: **http://www.sciencedirect.com/topics/engineering/binder-jetting.** This overview summarizes the content of several papers related to 3D printing techniques representative for the knowledge of those skilled in the art. For purpose of general information, this publication is herein incorporated by reference.

Binder jetting technology is notably disclosed in document US 6,036,777 (2000) and in US2015/0069649 A1.

A recent publication gives a complete overview about the relevant parameters of the binder jetting technology of ceramics:

"Binder jetting of ceramics: Powders, binders, printing parameters, equipment, and post-treatment" (2019) Xinyuan Lv, Fang Ye, Laifei Cheng*, Shangwu Fan, Yongsheng Liu Science and Technology on Thermostructural Composite Materials Laboratory, Northwestern Polytechnical University, Xi'an, 710072, PR China.

This publication investigates steps and applications of binder jetting printing ceramics and discusses the key factors such as powder properties, binders, printing parameters, equipment, and post-treatment process as well as the influence of particle shape and size distribution of the ceramic powders. The influence of additives such as droplet-formation mechanism and droplet-infiltration kinetics of binders is also described. Furthermore, this document discusses printing parameters such as layer thickness, saturation, printing orientation, equipment, and post-treatment. For the purpose of explanation of the binder jetting technology, this paper is incorporated in the present application by reference.

One important element of the binder jetting technology is the choice of the appropriate type of binder in view of its compatibility with the relevant ceramic, ceramic metal composite or metal powder. Various prior art documents have investigated different types of binders and ceramic powders.

WO2020/146452 A1 discloses a specific amine-containing adhesive polymer and a method for binder jetting additive manufacturing of an object. The method comprises separately feeding a powder from which said object is to be manufactured and a solution comprising an adhesive polymer dissolved in a solvent into an additive manufacturing device, wherein said adhesive polymer is an amine-containing polymer having a molecular weight of at least 200 g/mole dispensing selectively positioned droplets of said adhesive polymer, from a print head of said additive manufacturing device, into a bed of a powder to bind the particles and to produce a preform of the object to be manufactured.

US2019/0111618 A1 discloses a method for indirect additive manufacturing of an object by separately feeding a powder from which said object is to be manufactured and either a difunctional curable monomer or an adhesive polymer binder into an additive manufacturing device and dispensing selectively positioned droplets of said difunctional curable monomer or adhesive polymer binder, from a print head of said additive manufacturing device, into a bed of said powder to bind particles of said powder with said difunctional curable monomer or adhesive polymer binder to produce a curable preform having a shape of the object to be manufactured; and, in the case of the difunctional curable monomer, curing said curable preform to form a crosslinked object. These documents list a series of available curable monomers with their curing temperature. This document is herein incorporated by reference.

**Methodology for the manufacturing of the grinding ball of the present invention.**

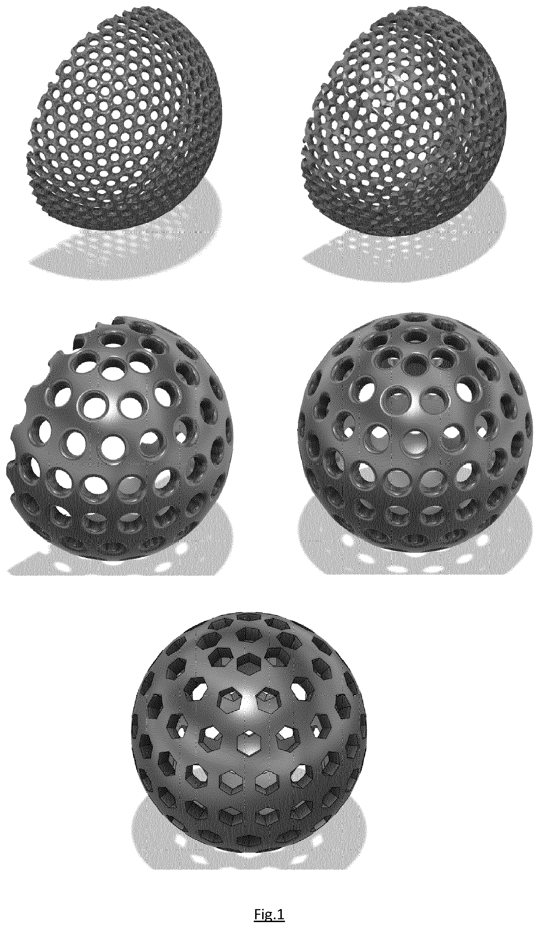

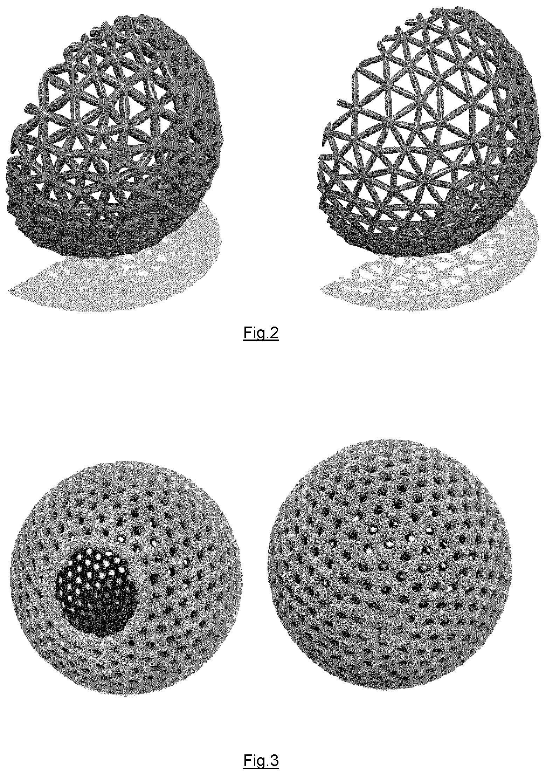

A preferred way to manufacture a grinding ball reinforced by a shell of a ceramic metal openwork structure is to create a digital 3D model structure (see figure 1 and 2 showing various possibilities) and build it in a 3D printing device, the structure is optionally partially sintered to improve its solidity. The mentioned 3D model is then placed in a cluster sand mould followed by a step of pouring hot liquid matrix metal (for example high chromium cast iron or steel containing more than 11 wt% Cr) in order to infiltrate the micro-porosities of the precast body and obtain a grinding ball substantially free of unfilled micropores in its reinforced ceramic metal composite structure.
The precast openwork structure manufacturing comprises the following steps:
Digital 3D model structure

-    A numerical 3D model of the shell of an openwork structure is generated with a computer-aided design (CAD) software (for example nTopology) https://ntopology.com/generative-design-software/ and converted in a format that can be handled by a 3D printing device, for example STL (Stereolithography) format.
    In nTopology, Field-Driven Design can be used to spatially vary parameters of the openwork structures, such as shell thickness, mesh size or geometry of the openwork structure.
-    The file is then processed by a slicing software that slices the model into 2D layers of predetermined thicknesses that can be printed.

Additive manufacturing (AM) process

Small particles (<100$\mu$m) are usually dangerous to handle for health and / or safety reasons and therefore larger ceramic metal composite particles wherein the fine ceramic particles are cemented in a metallic binder matrix are used in the present additive manufacturing process.

-    In this process, the ceramic metal powder is fed through a hopper, to build one single layer at a time of about 200 to 500 $\mu$m thickness for example, depending on the powder particle size. The ceramic metal powder particles can be selected from nitrides, borides or carbo nitrides such as for example TiC, TiCN, NbC, TaC, WC, ZrC, HfC, VC, $Mo_2C$, preferably titanium carbide or titanium carbonitride cemented in a metallic binder matrix and possibly some other carbide forming metallic particles to enhance wettability of the ceramic metal composite particles by the cast alloy while forming additional carbides *in situ.* The average particle size ($D_{50}$) is usually comprised between 200 and 500 $\mu$m, preferably between 200 and 400$\mu$m, most preferably between 200 and 300 $\mu$m (as measured by dry sieving according to ISO 4497:2020).
-    A sieving step may be required if the powder granulometry does not meet the particle size distribution target to eliminate the particle size fraction below 150 $\mu$m (conditioned by safety, flowability or printing resolution).
-    The ceramic metal composite powder possibly associated to a metal powder is introduced in the 3D printing device to build the openwork structure layer by layer deposited in the building box (vibrations and recoating roller may be used to increase the packing density of the layer, mainly in case of fine or poorly flowable powders).
-    Depending on the additive manufacturing technique, a moving head generates powder cohesion in specific areas on the layer, for instance by binder jetting. The agglomeration also occurs with the previous layers, underneath the current layer. In case of binder jetting, a liquid binder is deposited, by a moving head, as droplets in specific areas of the layer according to the 2D file. An important parameter is to define a suitable saturation level in order to get the suitable bonding between the particles of the layer and between the previous printed layer. The preferred binder is for example a water dispersible glycol-acrylic-based binder such as tetraethylene glycol dimethacrylate; tetraethylene glycol diacrylate; triethylene glycol dimethacrylate, diethylene glycol 2, metoxy ethanol or preferably mixings suitable for forming interconnected molecular networks which can be dispersed in water and cured at 130 to 200°C for about 2 hours per cm of material thickness of the box to be cured.
-    The next layer is then deposited, and the above steps are repeated until the whole insert has been built in the powder bed.

Curing and optional sintering

-    If a crosslinkable monomer binder has been chosen, it needs to be cured. The complete box is heated at a temperature of about 130 to 200°C in a curing oven to give strength (via polymerization, cross-linking, solvent evaporation or some other mechanisms) to the part during a period depending on the box volume and printed material to ensure homogeneity of temperature (for about 2 hours per cm of thickness for example).

- The box is then left to cool completely, and the excess powder is removed from the box by brushing, vacuuming or blowing compressed air for example. The green part can be handled safely without the risk of breakage.
- If the green pre-cast openwork body needs to be sintered, it is placed in a furnace and heated at high temperature (usually above 900°C), under controlled atmosphere (usually argon or vacuum) to perform the sintering step. The rate of sintering to be achieved depends on the desired mechanical property and the final porosity of the openwork structure.

Grinding ball manufacturing

- The prepared precast body's (shells of openwork structures) are placed in the preformed cavity of the cluster sand mould.
- The mould is closed, and liquid metal is poured into the mould.
- The interstices of the aggregated ceramic metal composite powder are observed to range globally between 10 and 700 $\mu$m, while most interstices range between 50 and 500 $\mu$m with an average interstice size between 150 and 300 $\mu$m.
- The 3D openwork structures have a homogeneous open porosity over the entire volume and in case of a partially sintered shells of ceramic openwork structures, the liquid cast metal infiltrates the remaining micro-porosity of the structure, leading to a very intimate ceramic/metal bound.
- The liquid metal is left to cool until complete solidification of the grinding balls. The sand mould is then removed, and the grinding balls are cleaned from remaining sand, and can follow the regular finishing foundry process steps known by those skilled in the art (knock-out, shot-blasting, grinding, additional heat treatments such as annealing, quenching, tempering,...).

**Examples of grinding balls**

The present examples are illustrative for the present disclosure but are not to be considered as limitative.

Preparation of the ceramic metal composite particles

The following powders of TiC, Titanium carbonitride, WC, NbC, $Mo_2C$, Iron, Manganese, Chromium, and Nickel were used for 3 different types of ceramic metal composite particles (CMP 1 to 3), all powders had a particle size smaller than 325 mesh (< 44$\mu$m).

**Table 1**

| Composition (wt%) | CMP 1 | CMP 2 | CMP 3 |
|---|---|---|---|
| TiC | 45 | 85 | |
| $TiC_{0.5}N_{0.5}$ | | | 65 |
| WC | | | 11 |
| NbC | | | 5 |
| Mo2C | | | 4 |
| Fe | 42.6 | 11.6 | |
| Mn | 9.1 | | |
| Cr | | 2.5 | |
| Ni | 2.2 | 0.6 | 15.0 |
| Mo | 1.1 | 0.3 | |

- The composition of **CMP 1** is particularly suitable for impact resistance due to its lower content of ceramic particles (45 wt% TiC) cemented in a tough manganese steel binder.

- The composition of **CMP 2** is particularly suitable for abrasion resistance due to its high content of titanium carbide (85 wt% TiC) cemented in a hard high chromium white iron wear resistant binder.
- The composition of **CMP 3** is particularly suitable for corrosion and wear resistance due to its high content of a complex mix of ceramic particles ($TiC_{0.5}N_{0.5}$ + WC+ NbC + $Mo_2C$ = 85 wt % in total) fine-tuned to be cemented in a corrosion resistant nickel binder.

Other ceramic particles can be added in order to create complex solid solution particles, control or fine tune grains size, morphology and/or core-rim structures of the ceramic particles.

Powders according to the compositions of table 1 have been mixed and ground in a ball mill with isopropyl alcohol and metallic grinding balls for 24h to reach an average particle size $D_{50}$ of about 3 $\mu$m.

An organic wax binder, 2 wt% of powder, is added and mixed with the obtained powders in the grinding step. The alcohol is removed by a vacuum-dryer with rotating blades (the alcohol being condensed to be reused). The agglomerated powder obtained is then sifted through a 600 $\mu$m sieve. Strips of 60% of the theoretical density of the ceramic/metallic powder mixtures are made by compaction between the rotating rolls of a roller compactor granulator. The strips are then crushed to irregular particles by forcing them through a sieve with appropriate mesh size. After crushing, the granules are sifted to obtain a dimension between about 200 to 600$\mu$m. These irregular porous particles are then sintered at high temperature (1300-1500°C for about 2 hours) in a high vacuum furnace with low partial pressure of argon until a minimal porosity (< 5 vol%, preferably less than 3 vol%, and more preferably even less than 1 vol%) is reached. After sintering, a further crushing and final sieving step is usually required to de-agglomerate the ceramic metal composite particles that could have agglomerated during the sintering.

Powder blend preparation for 3D printing:

The composition and size distribution of the powder blend is conditioned by the infiltrability of the additively manufactured shell of the openwork precast body structure. This infiltrability depend notably on the following parameters:

- thickness and microporosity of the openwork precast body,
- the proportion of openings in the openwork structure,
- the composition of the alloy to be poured into the mold which will influence the possible overheating needed based on liquidus temperature, liquidus-solidus range (high chromium cast alloy being easier to infiltrate openwork precast body structures than steel at the same temperature...).

It has been shown in the past that some metals, for instance magnesium, titanium or niobium have a positive influence on the wettability of ceramic particles by a cast metal matrix and therefore on the infiltrability of the shell of the openwork structure. Some of those metals (like Ti, Nb and other carbide forming metals) further have the positive effect of an additional carbide formation in combination with carbon present in cast iron as mentioned below.

The wettability of ceramic metal particles has notably been investigated by Massoud Malaki & al in "Wettability in Metal Matrix Composites" (2021) and in *"Role of wettability in the preparation of metal-matrix composites"* by Banerji & al (1984)

In the present disclosure the metallic particles of titanium and niobium fulfil a double role since they improve the infiltrability of the openwork structure and they react with the carbon always present in a ferrous cast alloy to build additional carbides *in situ.*

Three different types of powder blends 1 to 3 were prepared associating the ceramic metal composite particles CMP 1 to 3 to titanium and niobium powders. All powders contain less than 5 wt%, preferably 2 wt% of particles of a dimension below 150$\mu$m.

Blend according to table below are mixed for 15 minutes in a blender.

| Blend | Blend 1 | Blend 2 | Blend 3 |
|---|---|---|---|
| Ceramic metal particles (CMP) (wt%) | 80 wt% CMP1 | 93 wt% CMP2 | 85 wt% CMP3 |
| Titanium particles (wt%) | 20 | 7 | |
| Niobium particles (wt%) | | | 15 |
| $D_{50}$ Ceramic metal particles ($\mu$m) | 220 | 280 | 300 |
| $D_{50}$ Titanium particles ($\mu$m) | 220 | 220 | |

(continued)

| Blend | Blend 1 | Blend 2 | Blend 3 |
|---|---|---|---|
| $D_{50}$ Niobium particles ($\mu$m) | | | 250 |

## Cast alloys

| Wt% | C | Cr | Others | Fe |
|---|---|---|---|---|
| Cast alloy 1 | 2.2 | 16.5 | <2 | Balance |
| Cast alloy 2 | 2.85 | 14.5 | <2 | Balance |
| Cast alloy 3 | 2.3 | 29 | <2 | Balance |

Cast alloy 1 contains 2.2 wt% of C and 16.5 wt% of Cr and is particularly suitable for impact conditions with an appropriate heat treatment to improve impact resistance. Blend 1 powder is used to make the openwork structure. Composite grinding balls of the present invention and reference metallic grinding balls of cast alloy 1 are compared together during a same period in a same ball mill processing the same ore under significant impact conditions. Both grinding balls being submitted to the same heat treatment.

Cast alloy 2 contains 2.85 wt% of C and 14.5 wt% of Cr and is particularly suitable for abrasive conditions with an appropriate heat treatment to improve abrasion resistance. Blend 2 powder is used to make the shells. Composite balls of the present invention and reference metallic balls of cast alloy 2 are compared in a same ball mill with copper ore under significant abrasion conditions.

Cast alloy 3 contains 2.3 wt% of C and 29 wt% of Cr and is particularly suitable for conditions within high corrosion. Blend 3 powder is used to make the shells. Composite balls of the present invention and reference metallic balls of cast alloy 3 are compared in a same ball mill with magnetite iron ore under significant corrosion conditions.

Cast alloy 1, 2 and 3 also contain other alloying elements <2 wt% (Si, Mn, Mo, Ni...) known from those skilled in the art depending on specific properties and aimed heat treatment.

## Example 1 (blend 1 + cast alloy 1)

Blend 1 was used to print a shell of a ceramic openwork structure of 80 mm of diameter with a shell thickness of about 5 mm and 6 mm diameter openings/holes giving a surface coverage of 57% (as represented below and in Fig.7) on an X25 Pro 3D Binder jet printer from the company EXone. An aqueous binder based on a mix of diethylene glycol as dispersion in a water solution of 2-butoxyethanol was used to print the part (Aquafuse BA005 EXone).

The key parameters of the AM process were the following:

- each printed layer was about 300 $\mu$m thick;
- the printing speed was 60 seconds per layer;
- the binder saturation of the powder pores was 30%; and
- the powder packing density was about 43%.

After completion, the entire printing box was cured in an oven at about 200°C for 2 hours per cm of part height, the residence time depending on the structures since multiple items can be manufactured in one run. After cooling, the printing box was depowdered by vacuuming and brushed to obtain the green openwork structure.

The obtained green openwork precast structure was placed in a furnace and heated to about 1100°C for 2 hours in high vacuum.

The shell of the openwork precast structure comprises a total of about 83 vol% empty space available for a ferroalloy infiltration (about 61 vol% due to holes/openings of the openwork structure and an additional 22 vol% micrometric pores), the remaining 17 vol% in the openwork structure being ceramic - metal composite particles + metallic particles of titanium.

The obtained openwork precast structure is then positioned in the cavity of a cluster sand mould.

Hot liquid high-chromium white iron (with composition cast alloy 1) is then poured into the mould, filling the 61 vol% due to openings of the openwork precast structure and infiltrating the 22 vol% of micrometric porosity between the particles of the aggregate structure while forming additional carbides from the reaction of the carbon contained in the cast alloy with the metal powder.

After pouring, 39 vol% of the reinforced volume (1 - vol% holes of the openwork structure) contains a high concentration of about 30 vol% of titanium carbide. The global volume content of titanium carbide particles in the reinforced portion of the grinding ball is thus of about 12 vol%.

**Example 2** (blend 2 + cast alloy 2)

Example 2 is performed in the same way as example 1, but with blend 2 and a different shell of ceramic openwork structure of 90 mm diameter with a shell thickness of 8mm and openings/holes of 8mm diameter giving a surface coverage of 69% represented below and in Fig. 8.

The homogenous powder mixture of blend 2 was used to print a shell of a ceramic openwork structure with the same equipment and printer setup used for example 1. An aqueous binder based on a mix of diethylene glycol as dispersion in a water solution of 2-butoxyethanol was used to print the part (Aquafuse BA005 EXone).

The key parameters of the AM process were the same as in example 1. The obtained green shell of the openwork ceramic precast structure was placed in a furnace and heated to about 1000°C for 2 hours under argon atmosphere.

This structure was again obtained by a powder packing density of 46% and comprises a total of about 74 vol% empty space available for a ferroalloy infiltration (about 42 vol% due to openings in the structure and an additional 32 vol% micrometric pores between the ceramic metal composite particles), the remaining 27 vol% representing the structure of ceramic metal and metallic titanium of the openwork structure.

The obtained shell of the ceramic openwork structure is then positioned in the cavity of the sand mould.

Hot liquid high-chromium white iron (with composition of cast alloy 2) is then poured into the mould, filling the 42 vol% of the openings/holes of the openwork structure and infiltrating the 32 vol% of micrometric porosity between the ceramic metal composite particles of the structure.

After pouring, 58 vol% of the reinforced volume contains a high content of about 42 vol% of titanium carbide. The global volume content of titanium carbide particles in the reinforced portion of the grinding ball is thus of about 25 vol%.

**Example 3** (blend 3 + cast alloy 3)

Example 3 is performed with blend 3 and a different shell of openwork structure of 70 mm diameter with a shell thickness of 3 mm and openings/holes of 6mm diameter giving a surface coverage of 64% as represented below and in Fig.9.

An alcohol binder was used to print the part (Cleanfuse EXone).
The key parameters of the AM process were the following:

- each printed layer was about 450 μm thick;
- the printing speed was 45 seconds per layer;
- the binder saturation of the powder pores was 35%; and
- the powder packing density was about 47%.

The key parameters of the AM process were the same as for the previous examples (curing at 200°C for 2 hours and then furnace heated at 1050°C for 2 hours in argon atmosphere).

The shell of the ceramic openwork structure was obtained by a powder packing density of 47% and comprises a total of about 77 vol% empty space available for a ferroalloy infiltration (about 51 vol% due to openings/holes of the openwork structure and an additional 26 vol% micrometric pores inside the structure), the remaining 23 vol% representing the structure of ceramic metal composite granules + metallic niobium particles of the openwork structure.

The obtained structure is then positioned in a cavity of the sand mould and hot liquid high-chromium white iron (with composition cast alloy 3) is then poured into the mould, filling the 51 vol% of the openwork structure openings/holes and infiltrating the 26 vol% of micrometric porosity between the particles present in the openwork structure.

After pouring, 49 vol% of the reinforced volume contains a high content of about 43 vol% of ceramic particles such as titanium carbonitride, tungsten carbide, molybdenum carbide and niobium carbide or mixes thereof or even mixed carbides such as for example (Ti,Nb,W,Mo)C. The global volume content of ceramic particles in the reinforced portion of the grinding ball is thus of about 21 vol%.

**Example 4** (blend 3 + cast alloy 2)

Example 4 is performed with blend 3 and a different shell of openwork structure of 70 mm diameter with a shell thickness of 3 mm and openings of 10 mm diameter giving a surface coverage of 56% as represented below and in Fig. 10.

An alcohol binder I was used to print the part (Cleanfuse EXone). The key parameters of the AM process were the following:

- each printed layer was about 450 μm thick;
- the printing speed was 45 seconds per layer;
- the binder saturation of the powder pores was 35%; and

- the powder packing density was about 47%.

The key parameters of the AM process were the same as for the previous examples (curing at 200°C for 2 hours and then furnace heated at 1150°C for 2h in argon atmosphere).

The shell of the ceramic openwork structure was obtained by a powder packing density of 47% and comprises a total of about 77 vol% empty space available for a ferroalloy infiltration (about 51 vol% due to openings of the openwork structure and an additional 26 vol% micrometric pores inside the structure), the remaining 23 vol% in the openwork structure being ceramic metal composite granules + metallic niobium particles.

The obtained structure is then positioned in the cavities of the sand mould and hot liquid high-chromium white iron (with composition cast alloy 3) is then poured into the mould, filling the holes representing 50 vol% of the openwork structure and infiltrating the 31 vol% of micrometric porosity between the ceramic metal composite particles of the openwork structure.

After pouring, 49 vol% of the reinforced volume contains a high concentration of about 43 vol% of ceramic particles such as titanium carbonitride, tungsten carbide, molybdenum carbide and niobium carbide or mixes thereof or even mixed carbides such as for example (Ti,Nb,W,Mo)C . The global volume content of carbides or carbonitrides in the reinforced portion of the grinding ball is thus of about 21 vol%.

**Table 1**

| Parameters | Ex. 1 | Ex. 2 | Ex. 3 | Ex.4 |
|---|---|---|---|---|
| Grinding ball diameter (mm) | 80 | 90 | 70 | 70 |
| openwork structure external diameter (mm) | 80 | 90 | 70 | 70 |
| openwork structure internal diameter (mm) | 70 | 74 | 64 | 64 |
| Thickness of the shell (mm) | 5 | 8 | 3 | 3 |
| Hole diameter (mm) | 6 | 8 | 6 | 10 |
| Number of holes | 345 | 159 | 220 | 82 |
| Distance between openings in mm | 2.0 | 6.4 | 2.4 | 4.2 |
| Inflow hole diameter (mm) | 23 | 25 | 20 | 20 |
| Ball volume in $cm^3$ | 268 | 382 | 180 | 180 |
| Reinforced openwork structure /Ball volume ratio | 33% | 44% | 24% | 24% |
| Openwork structure volume in $cm^3$ | 34 | 99 | 21 | 21 |
| Openwork structure holes volume in $cm^3$ | 54 | 71 | 22 | 22 |
| Powder packing in vol% | 43% | 46% | 47% | 47% |
| Openwork structure micropores volume in $cm^3$ | 20 | 53 | 11 | 11 |
| Openwork structure external surface coverage in % | 57% | 69% | 64% | 59% |
| vol% empty space in shell available for a ferroalloy infiltration | 83% | 73% | 77% | 77% |
| vol% openwork structure holes | 61% | 42% | 51% | 51% |
| vol% micrometric pores inside the openwork structure | 22% | 32% | 26% | 26% |
| Ceramic particle content in the blend after possible reaction between metal and carbon (vol%) | 69% | 92% | 91% | 91% |
| Ceramic particle content in openwork structure after possible reaction of Ti or Nb with C (vol%) | 30% | 42% | 43% | 43% |
| Ceramic particle content in shell after possible reaction of Ti or Nb with C (vol %) | 12% | 25% | 21% | 21% |

The expressions "shell" , "reinforcement shell", "shell of openwork structure" and "openwork structure" are used interchangeably. The shell thickness is the thickness of the openwork structure disregarding the holes.

**Performance index calculated in comparison with conventional grinding balls**

The article "Overview of grinding media consumption in comminution" (Slabbert, Paton, Moema and Zimba) in World Gold Conference gives an overview over the testing of grinding media.

Real life tests of grinding balls on industrial grinding machines are particularly difficult to manage due to the low proportion of test grinding balls comparatively to the load of conventional grinding balls. The test samples represent generally less than 0.1% (400 balls among 400,000 to 800,000 balls) since the grinder contains grinding balls worn at various stages with a large diameter size distribution (20 to 70 mm of diameter for example). The main difficulty being here, after several days or weeks of grinding, to find at least a significant number of composite grinding balls submitted to the test and reference metallic grinding balls among thousands of conventional grinding balls to be able to measure a representative average weight loss percentage of composite test balls to be compared to reference metallic grinding balls.

The trick to solve this problem here is to use slightly bigger grinding ball diameter (about 10 mm bigger) than those added regularly and already present in the conventional grinder. For instance, if the fresh conventional grinding balls added regularly into the industrial grinder have a diameter of 60 mm, a diameter of 70 mm for the test grinding balls (composite and reference grinding balls) is chosen to allow more easy retrieval of the marked balls. Since those balls are bigger, they are not only visually easier to find but they have a natural tendency to "float" on the surface of the conventional grinding load.

The evaluation of the wear performance of the grinding balls of the present disclosure has been performed in a real-life context of copper ore, magnetite iron ore and platinum ore grinding in 3 mills A; B; C (with the following characteristics and conditions):

Grinding of copper ore with grinding balls of example 2 (90 mm of diameter)

- Mill A of 7.31 m diameter and 10.97 m length
- Containing 660 Tons of conventional grinding balls (33 vol% filling)
- Regular additions of several tons per day of conventional grinding balls of 76 mm diameter to compensate wear
- Rotation speed of 11.9 rpm
- Drawing a power of 10500 kW
- Processing 950 T/h of copper ore
- With abrasion conditions
- Test duration: 8 days

Grinding of magnetite iron ore with grinding balls of example 3 followed by a test with grinding balls of example 4 (70 mm)

- Mill B of 4.6 m of diameter and 6.7 m of length
- Filled with 165 Tons of conventional grinding balls (35 vol% filling)
- Regular additions of several tons per day of conventional grinding balls of 60 mm diameter to compensate wear
- Rotating at a speed of 15.1 rpm
- Drawing a power of 2300 kW
- Processing 420 T/h of magnetite iron ore
- With corrosion conditions
- Test duration: 20 days

Grinding of platinum ore in presence of grinding balls of example 1 (80 mm)

- **Mill C** of 7.925 m of diameter and 11.735 m of length
- Filled with 800 Tons of conventional grinding balls (32 vol% filling)
- Regular additions of several tons per day of conventional grinding balls of 70 mm diameter to compensate wear
- Rotating at a speed between 10.5 and 11.5 rpm
- Drawing a power of 15000 kW
- Processing 1000 T/h of platinum ore

- With <u>impact</u> conditions
- Test duration: 10 days

**Preparation of the test samples**

For the performance test of the composite grinding balls of examples 1 to 4, as well as for the metallic reference ball type, 200 grinding balls of every example have been produced and each grinding ball of the same alloy and reinforcement has been marked with the same identification means (for example one or two drilled hole of defined diameter and positions in all grinding balls of example 1; 2 holes in all grinding balls of example 2, etc.). All grinding balls of the same composition are further machined or ground to have the same weight (+/- 2 kg for grinding balls of 80 mm diameter) with a tolerance of +/- 5 grams, preferably +/- 2 grams. The composite grinding balls of the present disclosure and the reference metallic grinding balls are produced with the same ferro alloy and are submitted to the same heat treatment to be able to evaluate the influence of the ceramic reinforcement as the only variable.

In the next step, 200 composite test grinding balls and 200 reference metallic grinding balls are loaded together in the industrial mill (composite balls of Ex 1 in mill C, composite balls of Ex 2 in mill A and composite balls of Ex 3 in mill B). The industrial mills described above already contains their usual load of conventional grinding balls with a filling rate of about 35 vol%. This represents 660 tons of conventional grinding balls for Mill A, 165 tons for Mill B and 800 tons for Mill C whereas the amount of test and reference grinding balls (200 test grinding balls and 200 reference balls in each mill) represents only between about 600 and 900 kg, thus a negligible influence of the grinding capacity. The test grinding ball addition has therefore no significative impact on the overall mill filling.

The mill needs then to run a sufficient period to observe enough wear to be measurable. The necessary time period is generally around a few days or weeks under 24 hour/day conditions.

Depending on the type of ore to be ground, the wear of conventional grinding balls on magnetite iron ore is known to be around 0.5 mm/100h (about 2.4 mm after 20 days) on the diameter, whereas for copper ore it is observed to be around 1.5 mm/100h (about 3 mm after 8 days) on the diameter. On platinum ore the wear is expected to be around 1.3 mm/100 hours (about 3 mm after 10 days). This indication related to the wear speed of conventional grinding balls was considered to choose the test duration to make sure that the wear remains into the reinforced shell thickness to have an appropriate interpretation of the effect of the reinforcement shell as such.

Finally, the mill is stopped, and the test grinding balls which were found and identified (usually less than 10 % of the start quantity) were weighted to evaluate the average mass loss and compute the performance index as shown in result table below.

Performance index calculation

For each example of grinding balls, the average weight loss is measured before and after the test duration and an average weight loss percentage is calculated.

$$\text{weight loss } \%/100 = (\text{initial weight - final weight}) / \text{initial weight}$$

A performance index is defined as below, the weight loss of reference being the average weight loss of the reference metallic grinding balls.

$$PI = \text{weight loss of reference metallic grinding balls} / \text{weight loss of test composite grinding balls}$$

Performance index above 1 means that the test composite grinding ball according to the invention is less worn than the reference, below 1 means that the test composite grinding ball is more worn than the reference. The reference grinding ball being a conventional grinding ball made of the same cast alloy but without any ceramic reinforcement. As represented in the table below, the grinding balls of the present invention show in average a better performance due to the reinforced shell.

| Example | Granule composition CMP | Cast alloy composition | opening % in openwork structure | Diameter of openings/ holes (mm) | Performance index |
|---|---|---|---|---|---|
| 1 | 1 | 1 | 60% | 6 | 2 |
| 2 | 2 | 2 | 40% | 8 | 2.8 |
| 3 | 3 | 3 | 50% | 6 | 3 |
| 4 | 3 | 3 | 50% | 10 | 2.6 |

Performance index of example 3 shows the best performance of the composite shell in case of holes of smaller diameter compared to example 4 with bigger holes. Examples 1 to 4, shows the significantly better performance of composite core-shell grinding balls with various composition and properties of the particles, cast alloys and conditions of test.

The performance of the composite grinding balls of the present disclosure is compared to conventional grinding balls as mentioned above and if the reinforced shell is not totally worn and has completely disappeared, therefore the thickness of the reinforcement shell has naturally an influence on the global performance of the grinding ball. A grinding ball with a composite reinforcement shell of 10 mm thickness will have a better performance on the long run than its equivalent with a reinforcement shell of 5 mm thickness.

Influence of the performance index on the global grinding performance

The following table compares the wear, in average weight loss percentage, of examples 1 to 4 (composite grinding balls) to their respective reference grinding balls. The increased lifetime is calculated considering their performance index and its influence on the lifetime of the grinding ball.

The lifetime of a grinding ball is usually evaluated as the time needed to wear the ball from its initial diameter down to 20 mm. Once the grinding ball diameter has reached 20 mm, the ball is considered small enough to leave the mill with the ground material through the outlet trunnion.

The measured weight loss is transformed into a diameter reduction per unit of time allowing the calculation of the increased lifetime.

A significant gain of lifetime due to the reinforced openwork structure is observed allowing the grinding ball to maintain, for a longer period of time, a diameter close to its original value.

| Examples | Diameter (mm) | Reinforced Shell thickness (mm) | Weight Loss (%) | Weight Loss Reference (%) | Increased lifetime (hours) |
|---|---|---|---|---|---|
| 1 | 80 | 5 | 6.1% | 12.3% | 800 |
| 2 | 90 | 8 | 3.7% | 10.5% | 1950 |
| 3 | 70 | 3 | 3.8% | 11.3% | 2300 |
| 4 | 70 | 3 | 4.3% | 11.2% | 1900 |

Examples 1 to 4, shows the significantly better performance of composite core-shell grinding balls with various composition and properties of granules, cast alloys and conditions of test.

**Observations**

Disregarding the influence of the various ceramic metal and cast alloy compositions on the wear behaviour in specific grinding environment, the influence of the geometry of the openwork structure disclosed herein plays an important role. Parameters to be considered are for example the ratio of the surface coverage of the ceramic reinforcement, size of the openings, ratio of the thickness relative to the size of the openings as well as distance between the openings, (see table 1)

It has been observed that the ease of infiltration of the openwork structure by the cast ferro alloy is globally inversely proportional to the ratio of the surface coverage as well as to the thickness of the reinforcement while it is proportional to the size of the openings and the distance between openings. However, the wear resistance for a specific CMP/cast alloy composition is dependent on the ratio of the surface coverage as well as on the thickness of the reinforcement while it is inversely proportional to the size and the distance between openings.

Since the difficulty of infiltrability should not be underestimated a compromise must therefore be found between those parameters keeping in mind that combinations of high openwork thicknesses (>10 mm) with very small opening (<2mm) highly distant to each other should be avoided, while lower openwork thicknesses (<10 mm) with medium openings (>2mm) close to each other (<10mm) should be preferred.

**Advantages of the present invention**

The present invention has the following advantages in comparison with conventional grinding balls:

- Better wear performance efficiency due to better wear performance of the shell layer representing most of the wearable volume (useless to have the reinforcement everywhere inside the ball)

- Better wear performance and/or mechanical properties of the composite grinding balls by tailoring the nature, the size and volume content of ceramic particles and use of an appropriate metal binder matrix for the ceramic metal composite granules such as for example high mechanical properties manganese steel combined to the appropriate ferrous cast alloy such as for example high chromium white iron for the wear part, the binder metal matrix possibly being different and complementary to the cast ferro alloy metal matrix.

- Better wear performance and/or mechanical properties of the grinding balls due to controlled porosity and/or crack defects in granules prior to pouring.

- Easy/simple process.

**Claims**

1. A composite grinding ball comprising:

   - a ferroalloy metal matrix,
   - a reinforcement shell of an openwork ceramic structure of aggregated ceramic metal composite particles, said aggregated ceramic metal composite particles comprising micrometric ceramic particles cemented in a binder metal matrix;

   wherein said aggregated ceramic metal composite particles are embedded in said ferro alloy metal matrix.

2. The composite grinding ball according to claim 1 wherein the micrometric ceramic particles are selected from the group consisting of metallic borides, metallic nitrides, metallic carbides and metallic carbonitrides.

3. The composite grinding ball according to claim 1 or 2 wherein the micrometric ceramic particles are selected from the group consisting of titanium carbide, titanium carbonitride, niobium carbide, tantalum carbide, zirconium carbide, hafnium carbide, vanadium carbide, molybdenum carbide and tungsten carbide or mixes thereof.

4. The composite grinding ball according to any of the preceding claims wherein the micrometric ceramic particles are selected from the group consisting of titanium carbide or titanium carbo nitride or mixes thereof.

5. The composite grinding ball according to any of the preceding claims wherein the ceramic composite particles have an average particle size $D_{50}$ lower than 500$\mu$m, preferably lower than 400 $\mu$m.

6. The composite grinding ball according to any of the preceding claims wherein the micrometric ceramic particles cemented in the binder metal matrix have an average particle size $D_{50}$ lower than 30 $\mu$m, preferably lower than 20 $\mu$m, most preferably lower than 10$\mu$m.

7. The composite grinding ball according to any of the preceding claims wherein the binder metal matrix cementing the micrometric ceramic particles is selected from the group consisting of ferromanganese-based alloy, ferrochromium-based alloy and nickel-based alloy and wherein the binder metal matrix and the ferro alloy metal matrix have a different composition.

8. The composite grinding ball according to any of the preceding claims wherein the cast ferroalloy metal matrix comprises steel or chromium cast iron.

9. The composite grinding ball according to any of the preceding claims wherein the content of the ceramic particles within the openwork structure is between 30 to 55 vol %, preferably between 35 and 50 vol %.

10. The composite grinding ball according to any of the preceding claims wherein the aggregated ceramic metal composite particles comprise a sinter metal filling the interstices between the ceramic metal composite particles of the openwork structure selected from the group consisting of steel and cast iron or combinations thereof.

11. The composite grinding ball according to any of the preceding claims wherein the openings of the reinforcement shell of the openwork ceramic structure represents between 10 and 80 %, preferably 20 and 70 %, most preferably 25 to 65 % of the surface of the grinding ball.

12. Method for the manufacturing of the composite grinding ball according to claim 1 to 11 comprising the steps of:

   - a) additive manufacturing of a shell of a ceramic openwork structure with a powder mix comprising ceramic metal composite particles;
   - b) positioning the shell of the ceramic openwork structure in a cavity of a mould;
   - c) pouring the ferro alloy cast metal in the mould to obtain the reinforced grinding ball of claim 1.

13. Method according to claim 12 comprising an additional step of at least partially sintering the ceramic openwork structure.

14. Method according to claim 13 wherein the step of at least partially sintering the shell of the ceramic openwork structure comprises a partial impregnation of the interstices between the ceramic metal composite particles of said structure by a metal selected from the group consisting of steel and chromium cast iron or combinations thereof before the positioning in the cavity of the mould and the final casting.

15. Method according to claims 13 to 14 wherein the step of at least partially sintering the shell of the ceramic openwork structure is followed by a hot isostatic pressing step or post infiltration.

16. Method according to claim 12 wherein the step a) comprises the addition of 2 to 20 wt%, preferably 5 to 20 wt%, most preferably 10 to 18 wt% of carbide forming metallic particles selected from the group consisting of tungsten, vanadium, molybdenum, titanium, niobium, hafnium and zirconium or mixtures thereof.

17. Method according to claim 12 wherein the ceramic composite particles of the powder mix of step a) comprises at least 95 %, preferably 98 %, of particles larger than 150 $\mu$m.

18. Method according to claim 12 wherein the step a) is performed by binder jetting technology followed by a binder curing at a temperature above 100°C.

19. Method according to claims 12 wherein the step of pouring the cast metal to obtain the reinforced grinding ball is performed in a grinding ball cluster mould.

Fig.1

Fig.2

Fig.3

Fig.4

Fig.5

Fig.6

Fig. 7

Fig.8

Fig.9

Fig.10

Fig.11

Fig.12

Europäisches
Patentamt

European
Patent Office

Office européen
des brevets

# EUROPEAN SEARCH REPORT

Application Number

EP 22 18 2590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | CN 106 914 620 A (UNIV KUNMING SCIENCE & TECH) 4 July 2017 (2017-07-04) * claims 1, 7 * | 1-19 | INV. B33Y80/00 C04B41/51 C22C29/04 |
| Y | WO 2022/122393 A1 (MAGOTTEAUX INT S A [BE]) 16 June 2022 (2022-06-16) * claims 1, 6-8, 11-15 * * paragraph [0001] * | 1-19 | C22C29/10 C22C33/02 B33Y70/10 C22C29/06 |

TECHNICAL FIELDS SEARCHED (IPC)

B33Y
C04B
C22C
B22F

The present search report has been drawn up for all claims

| Place of search | Date of completion of the search | Examiner |
|---|---|---|
| The Hague | 22 December 2022 | Helgadóttir, Inga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2590

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2022

| Patent document cited in search report | Publication date | Patent family member(s) | Publication date |
|---|---|---|---|
| CN 106914620    A | 04-07-2017 | NONE | |
| WO 2022122393   A1 | 16-06-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106914620 A
- CN 103357854
- CN 113564511 A
- US 6036777 A
- US 20150069649 A1
- WO 2020146452 A1
- US 20190111618 A1

**Non-patent literature cited in the description**

- Binder jetting of ceramics: Powders, binders, printing parameters, equipment, and post-treatment. **XINYUAN LV ; FANG YE ; LAIFEI CHENG ; SHANGWU FAN ; YONGSHENG LIU.** Science and Technology on Thermostructural Composite Materials Laboratory. Northwestern Polytechnical University, 2019
- **MASSOUD MALAKI.** *Wettability in Metal Matrix Composites,* 2021
- **BANERJI.** *Role of wettability in the preparation of metal-matrix composites,* 1984
- **SLABBERT ; PATON ; MOEMA ; ZIMBA.** Overview of grinding media consumption in comminution. *World Gold Conference*